# EUROPEAN PATENT APPLICATION

(11) **EP 1 586 973 A2**
(43) Date of publication of application: **19.10.2005**
(21) Application number: 05004078.1
(22) Date of filing: 24.02.2005
(51) Int. Cl.: G06F 1/00

(54) **Method for encryption backup and method for decryption restoration**

(30) Priority: 13.04.2004 JP 2004117717; 01.10.2004 JP 2004290594
(71) Applicant: Hitachi, Ltd., Tokyo 100-8280 (JP)
(72) Inventor: Kasai, Kaori, Tokyo 100-8220 (JP); Teramura, Takeshi, Tokyo 100-8220 (JP); Saito, Motonobu, Tokyo 100-8220 (JP)
(74) Representative: Strehl Schübel-Hopf & Partner

(57) **Abstract**

A backup method which encrypts user data with an encryption/decryption key generated in an authenticated device; generates a reissue data processing key from a password and a device key in the authenticated device; generates reissue data by encrypting the encryption/decryption key with the generated key; furthermore, generates emergency reissue data by encrypting the password, an authority ID, and the like with an emergency reissue data processing key generated from an insurer key and a users organization key; and backs up the encrypted user data, the reissue data, and the emergency reissue data in a server.

## Description

### CROSS-REFERENCE TO RELATED APPLICATIONS

The present application claims priority upon Japanese Patent Applications Nos. 2004-117717 and 2004-290594 filed on April 13, 2004 and October 1, 2004 respectively, which are herein incorporated by reference.

### BACKGROUND OF THE INVENTION

### 1. FIELD OF THE INVENTION

The present invention relates to a data backup method which encrypts data in a client terminal such as an IC card or a cellular phone using an electronic key stored in a device such as an IC card, and further to a data restoration method for safely and easily restoring the backed-up encrypted data using the electronic key.

### 2. DESCRIPTION OF THE RELATED ART

A method which enables the once-used environment of a personal computer to be set up on another personal computer is disclosed as means for easily, safely and immediately backing up and restoring data in a client terminal. Refer to Japanese Patent Laid-open Publication No. 2001-34580. Specifically, user data on a PC is encrypted with the user's key and the encrypted data is backed up by storing in a server. When restoring, the backed-up data is obtained from the server, and decrypted with the user's key. Note that the key is preferably generated and stored in an IC card.

The conventional art does not disclose means to restore with user data that has been stored in a server, when the IC card holding a key is broken down or lost.

### SUMMARY OF THE INVENTION

One object of the present invention is to enable users to restore data easily and certainly even when the IC card holding a key is broken down or lost.

Another object of the present invention is to enable a person, set beforehand to have restoration authority, to restore client data when a user cannot restore his data on his own such as when the user is in an unforeseen situation.

That is, a major object of the present invention is to provide an encryption backup method and decryption restoration method that enables easy and certain restoration of client data, for example, even when key data that was used in backup and restoration is lost.

An encryption backup method of the present invention to achieve the above and other objects is an encryption backup method to be executed by an authenticated device of a system having at least the authenticated device and a backup apparatus as components, comprising the steps of generating an encryption/decryption key to encrypt client data therewith; storing the encryption/decryption key in a storage apparatus; accepting an arbitrary password through a predetermined input interface; storing the password as a first password in the storage apparatus; generating a reissue data processing key from the first password; and encrypting the encryption/decryption key with the reissue data processing key to generate reissue data.

An encryption backup method of the present invention is an encryption backup method to be executed by an authenticated device of a system having at least the authenticated device and a backup apparatus as components, comprising the steps of accepting an arbitrary password through a predetermined input interface; storing the password as a first password in a storage apparatus; and generating a reissue data processing key to encrypt client data therewith from a device key stored in the storage apparatus and the first password.

An encryption backup method of the present invention is an encryption backup method to be executed by an authenticated device of a system having at least the authenticated device and a backup apparatus as components, comprising the steps of accepting an arbitrary password through a predetermined input interface; storing the password as a first password in the storage apparatus; generating a reissue data processing key to encrypt client data therewith from the first password; and encrypting the first password using an insurer key stored in the storage apparatus so as to be associated with a restoration insurer for backed-up, encrypted client data, thereby generating emergency reissue data.

A decryption restoration method of the present invention is a decryption restoration method to be executed by an authenticated device of a system having at least the authenticated device and a backup apparatus as components, comprising the steps of accepting an arbitrary password through a predetermined input interface; generating a reissue data processing key from the password; acquiring reissue data generated beforehand by encrypting an encryption/decryption key with a reissue data processing key generated from a first password that is an arbitrary password accepted through the input interface, from an information processing apparatus storing the reissue data; and decrypting the reissue data with the reissue data processing key generated in the generating step thereby taking out the encryption/decryption key to decrypt encrypted client data therewith.

A decryption restoration method of the present invention is a decryption restoration method to be executed by an authenticated device of a system having at least the authenticated device and a backup apparatus as components, comprising the steps of accepting an arbitrary password through a predetermined input interface; and generating a reissue data processing key to decrypt encrypted client data therewith from a device key stored in a storage apparatus and the password.

A decryption restoration method of the present invention is a decryption restoration method to be executed by an authenticated device of a system having at least the authenticated device and a backup apparatus as components, comprising the steps of acquiring emergency reissue data generated beforehand by encrypting a first password, that is an arbitrary password accepted through an input interface, using an insurer key stored in a storage apparatus so as to be associated with a restoration insurer for backed-up, encrypted client data, from an information processing apparatus storing the emergency reissue data; decrypting the emergency reissue data using the insurer key stored in the storage apparatus thereby taking out the first password; and generating a reissue data processing key to decrypt encrypted client data therewith from the first password.

A decryption restoration method of the present invention is a decryption restoration method to be executed by an authenticated device of a system having at least the authenticated device and a backup apparatus as components, comprising the steps of acquiring emergency reissue data generated beforehand by encrypting a first password, that is an arbitrary password accepted through an input interface, using an insurer key stored in a storage apparatus so as to be associated with a restoration insurer for backed-up, encrypted client data, from an information processing apparatus storing the emergency reissue data; decrypting the emergency reissue data using the insurer key stored in the storage apparatus thereby taking out the first password; generating a reissue data processing key from the first password; acquiring reissue data generated beforehand by encrypting an encryption/decryption key with a reissue data processing key generated from a first password that is an arbitrary password accepted through the input interface, from an information processing apparatus storing the reissue data; and decrypting the reissue data with the reissue data processing key generated in the generating step thereby taking out the encryption/decryption key to decrypt encrypted client data therewith.

A decryption restoration method of the present invention is a decryption restoration method to be executed by an authenticated device of a system having at least the authenticated device and a backup apparatus as components, comprising the steps of acquiring emergency reissue data generated beforehand by encrypting a first password, that is an arbitrary password accepted through an input interface, using an insurer key stored in a storage apparatus so as to be associated with a restoration insurer for backed-up, encrypted client data, from an information processing apparatus storing the emergency reissue data; decrypting the emergency reissue data using the insurer key stored in the storage apparatus so as to be associated with the restoration insurer for backed-up, encrypted client data, thereby taking out the first password; and generating a reissue data processing key to decrypt encrypted client data therewith from the first password and a device key stored in the storage apparatus.

A decryption restoration method of the present invention is a decryption restoration method to be executed by an authenticated device of a system having at least the authenticated device and a backup apparatus as components, comprising the steps of acquiring emergency reissue data generated beforehand by encrypting an encryption/decryption key to encrypt/decrypt encrypted client data therewith generated in the authenticated device, using an insurer key stored in a storage apparatus so as to be associated with a restoration insurer for backed-up, encrypted client data, from an information processing apparatus storing the emergency reissue data; and decrypting the emergency reissue data using the insurer key stored in the storage apparatus, thereby taking out the encryption/decryption key.

A decryption restoration method of the present invention is a decryption restoration method to be executed by an authenticated device of a system having at least the authenticated device and a backup apparatus as components, comprising the steps of acquiring emergency reissue data generated beforehand by encrypting a reissue data processing key generated from a first password, that is an arbitrary password accepted through an input interface, using an insurer key stored in a storage apparatus so as to be associated with a restoration insurer for backed-up, encrypted client data, from an information processing apparatus storing the emergency reissue data; decrypting the emergency reissue data using the insurer key stored in the storage apparatus thereby taking out the reissue data processing key; acquiring reissue data generated beforehand by encrypting an encryption/decryption key with a reissue data processing key generated from a first password that is an arbitrary password accepted through the input interface, from an information processing apparatus storing the reissue data; and decrypting the reissue data with the taken-out reissue data processing key thereby taking out the encryption/decryption key to decrypt encrypted client data therewith.

An encryption backup method of the present invention is an encryption backup method to be executed by a backup apparatus of a system having at least an authenticated device and the backup apparatus as components, comprising the steps of accepting client data encrypted with an encryption/decryption key generated in the authenticated device through a predetermined input interface; and accepting reissue data generated by encrypting the encryption/decryption key with a reissue data processing key generated in the authenticated device from an arbitrary password through a predetermined input interface.

An encryption backup method of the present invention is an encryption backup method to be executed by a backup apparatus of a system having at least an authenticated device and the backup apparatus as components, comprising the step of accepting client data encrypted with a reissue data processing key generated in the authenticated device from a device key stored in the authenticated device and an arbitrary password through a predetermined input interface.

An encryption backup method of the present invention is an encryption backup method to be executed by a backup apparatus of a system having at least an authenticated device and the backup apparatus as components, comprising the steps of accepting client data encrypted with a reissue data processing key generated in the authenticated device from an arbitrary password through a predetermined input interface; and accepting emergency reissue data generated by encrypting the arbitrary password with an insurer key stored in the authenticated device through a predetermined input interface.

According to the present invention, for example, even when key data used for backup and restoration is lost, client data can be restored easily and certainly.

Features and objects of the present invention other than the above will become clear by reading the description of the present specification with reference to the accompanying drawings.

### BRIEF DESCRIPTION OF THE DRAWINGS

For more complete understanding of the present invention and the advantages thereof, reference is now made to the following description taken in conjunction with the accompanying drawings wherein:
FIG. 1 is a view showing relationships between those involved according to an embodiment of the present invention;
FIG. 2 is a view showing the whole system according to the embodiment of the present invention;
FIG. 3 is a view showing the configuration of hardware according to the embodiment of the present invention;
FIG. 4 is a view showing data transitions in the embodiment of the present invention;
FIG. 5 is a flow diagram of a user registration process according to the embodiment of the present invention;
FIG. 6 is a screen view of a menu selection process according to the embodiment of the present invention;
FIG. 7 is a screen view of a backup process according to the embodiment of the present invention;
FIG. 8 is a view showing the function blocks in the backup process according to the embodiment of the present invention;
FIG. 9 is a flow diagram of an authenticated device second-order issue process according to the embodiment of the present invention;
FIG. 10 is a flow diagram of an encryption backup process according to the embodiment of the present invention;
FIG. 11 is a flow diagram of an authority setting process according to the embodiment of the present invention;
FIG. 12 is a screen view of the authority setting process according to the embodiment of the present invention;
FIG. 13 is a screen view of a restoration process according to the embodiment of the present invention;
FIG. 14 is a flow diagram of a second-order reissue process according to the embodiment of the present invention;
FIG. 15 is a flow diagram of a decryption restoration process according to the embodiment of the present invention;
FIG. 16 is a screen view of a PW change process according to the embodiment of the present invention;
FIG. 17 is a flow diagram of the PW change process according to the embodiment of the present invention;
FIG. 18 is a view showing relationships between data in respective modules of a to-have-data-restored person and an authority according to the embodiment of the present invention;
FIG. 19 is a flow diagram of an emergency restoration process according to the embodiment of the present invention;
FIG. 20 is a flow diagram of an emergency reissue data reissue process according to the embodiment of the present invention; and
FIG. 21 is a flow diagram of an emergency restoration data storage process according to the embodiment of the present invention.

### DETAILED DESCRIPTION OF THE INVENTION

At least the following matters will be made clear by the explanation in the present specification and the description of the accompanying drawings.

### ===Principle===

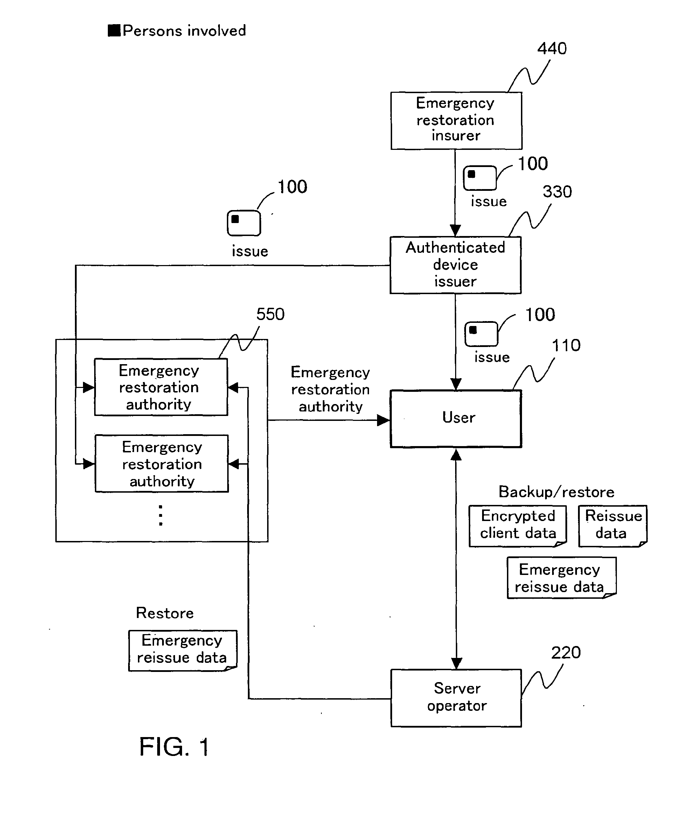

The best mode for carrying out the invention will be described with reference to the drawings. FIG. 1 shows relationships between involved persons in a system realizing the present invention and including at least an authenticated device and a backup apparatus. In this system, requests for encryption backup and decryption restoration of client data are received from a user, and processing is performed according to the present invention. The involved persons in this system are, for example, five: a user 110 who uses this system, a server operator 220, an authenticated device issuer 330, an emergency restoration insurer 440, and an emergency restoration authority 550.

The emergency restoration authority 550 is another user 110 having emergency restoration authority to be able to restore forcibly where, for example, having encountered an accident, it is impossible for the user 110 to restore client data (indicated by the same reference numeral because they are both users of the system). It is assumed that more than one emergency restoration authority exists for one user. In contrast, the emergency restoration insurer 440 is an agency that insures emergency restoration for the emergency restoration authorities 550. The emergency restoration insurer 440 stores in authenticated devices 100 an emergency restoration insurer key (or insurer key) common to all the authenticated devices 100 and issues the authenticated devices 100 to the authenticated device issuer 330.

The authenticated device issuer 330 stores in the received, authenticated devices 100 a device key common to all authenticated devices 100, a users organization key that is a key of the organization to which the user 110 belongs, the identification of the users organization (ID), and an authority information list, and then issues the authenticated devices 100 to the user 110 and authorities 550.

Let the processing up to here be a first-order issue process. Incidentally, the storing of the authority information list may be omitted, in which case the authority information list is edited and stored in an authority setting process described later.

Here, the organization to which a user belongs is, for example, the company for which the user works and which is registered beforehand in the authenticated device issuer 330. Furthermore, user 110 and authority 550 belong to the same users organization. The users organization ID is an ID assigned uniquely to the organization. The authority information list is a list in which information about emergency restoration including respective authority IDs of authorities 550 is put together. The authority ID is a user ID of the emergency restoration authority 550. For one user, more than one emergency restoration authority exists. Hence, more than one authority ID also exists. The user ID will be described later. It is noted that the emergency restoration insurer key, the device key and the users organization key stored in authenticated devices 100 are generated in predetermined apparatuses or the like of the emergency restoration insurer and the authenticated device issuer by using random numbers, for example.

The user 110 generates restoration data necessary for restoring client data and emergency restoration data necessary for emergency restoration using an authenticated device 100 at a user terminal 200, and has them backed up in a server being operated by the server operator 220. The server 300 of the server operator 220 restores in a user terminal 200 by using the restoration data for the user 110 or the emergency restoration data for the emergency restoration authority 550.

Note that where emergency restoration is not implemented, the emergency restoration insurer 440 and the emergency restoration authorities 550 can be omitted and also the emergency restoration insurer key, the users organization key, the users organization ID, and the authority information list can be omitted.

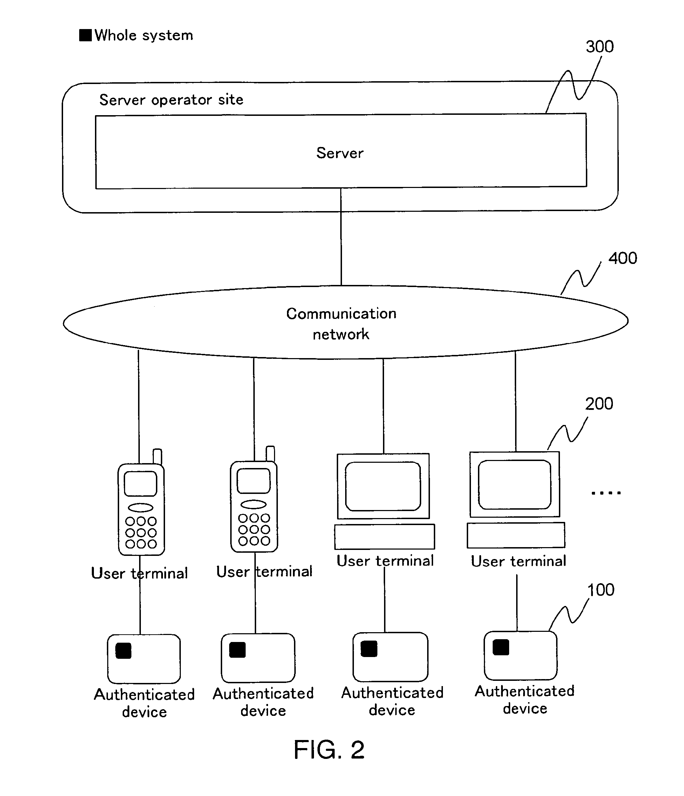

FIG. 2 shows the configuration of a client terminal data backup/restoration system to which the present embodiment is applied. The authenticated device 100 stores various data such as the emergency restoration insurer key, the users organization key and the device key. Moreover, the authenticated device 100 is connected electronically to a user terminal 200 and generates various electronic keys such as an encryption/decryption key, and encrypts data. Specific methods for generating electronic keys and for encrypting data will be described later. Note that the authenticated device 100 may be contained in the user terminal 200.

In contrast, the user terminal 200 is a terminal possessed by a user 110. The user terminal 200 stores client data for the user 110 and is connected to the server 300 through a communication network 400 such as the Internet or cellular phone network.

The server 300 is a server being operated by the server operator 220 and, in response to requests from the user terminal 200, becomes a destination to back up client data therein or a source to restore it therefrom. In short, the server 300 is a backup apparatus of the present invention.

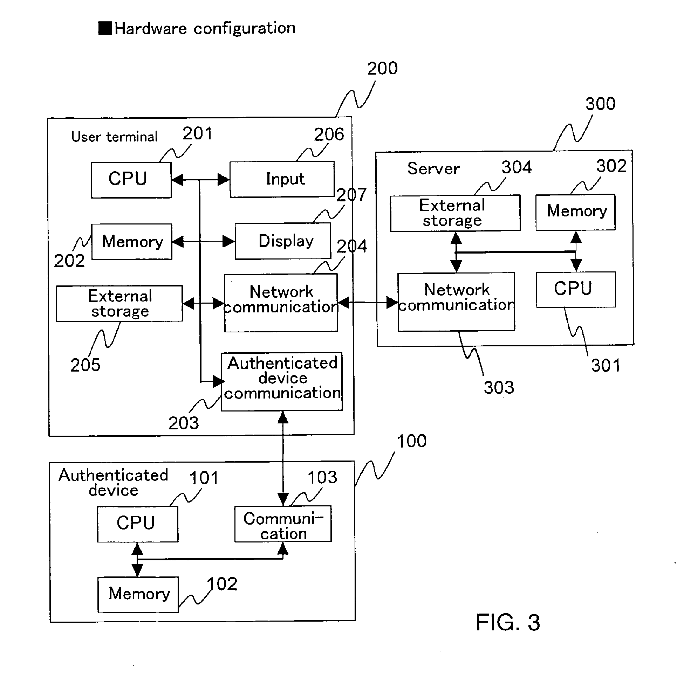

FIG. 3 shows the configuration of the authenticated device 100, the user terminal 200, and the server 300. The authenticated device 100 comprises a CPU 101 that performs data processing and computation such as generating various electronic keys, e.g., an encryption/decryption key, and encrypting data; a memory 102 that CPU 101 can directly read therefrom and write thereinto; and a communication apparatus 103 for sending and receiving data to and from the user terminal 200.

The memory 102 has both functions to store temporarily and to store statically. The authenticated device 100 preferably has resistance to tampering in order to prevent the forgery or unauthorized copy of various electronic keys, e.g., an encryption/decryption key. Specific examples of the authenticated device 100 are a memory card and IC card with a CPU function.

The user terminal 200 is a usual computer system comprising a CPU 201 that executes application programs; a memory 202 that CPU 201 can directly read therefrom and write thereinto; an external storage apparatus 205 such as a hard disk; an authenticated device communication apparatus 203 for communicating with the authenticated device 100; a network communication apparatus 204 for communicating with the server 300; an input apparatus 206 (a key board, a mouse, key buttons, voice input, etc.); and a display apparatus 207 such as a display. Specific examples of the user terminal 200 are, for example, a cellular phone, a PDA (Personal Digital Assistant), and a PC (Personal Computer).

The server 300 is a usual computer system comprising a CPU 301 that executes application programs; a memory 302 that CPU 301 can directly read therefrom and write thereinto; a network communication apparatus 303 for communicating with the user terminal 200; and an external storage apparatus 304 for storing data. Specific examples of the server 300 are, for example, a PC server, a work station, and a host computer.

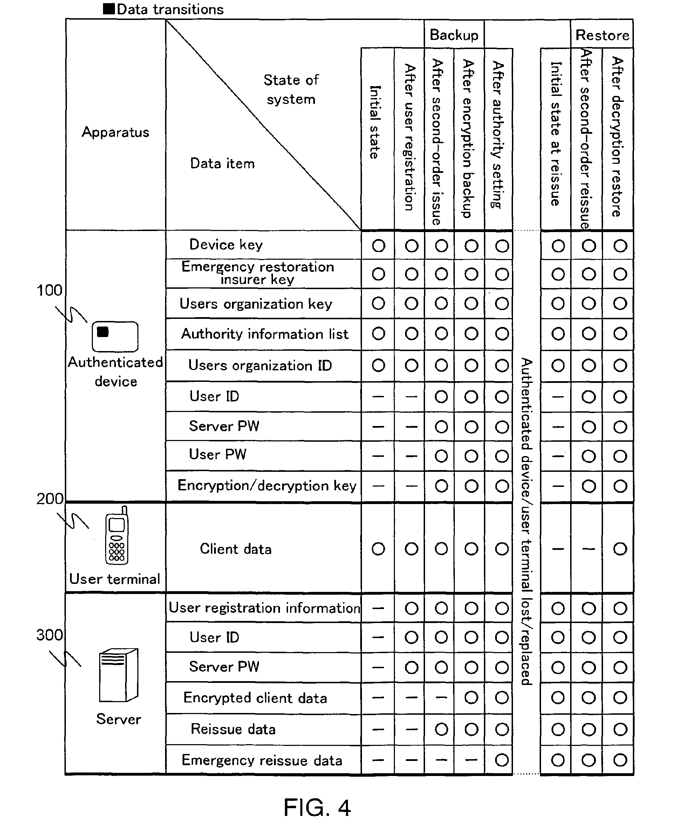

FIG. 4 shows data transitions in the present system. In the table of the figure, the horizontal axis represents the state of the system and the vertical axis represents a data item and an apparatus to store the data. In the figure, "O" indicates data existing and "-" indicates data not existing.

Note that where emergency restoration is not implemented, the authority setting process, the emergency restoration insurer key, the users organization key, the authority information list, the users organization ID, and the emergency reissue data can be omitted.

When using the present system, a user registration process is performed between the user terminal 200 and the server 300. Subsequent to this user registration process, client data is backed up from the user terminal 200 into the server 300.

In this process flow, an initializing process for using the authenticated device 100, a second-order issue process (described later), is executed between the authenticated device 100 and the server 300. Thereafter, the encryption backup process of client data in the user terminal 200 is carried out so that the encrypted client data is backed up in the server 300.

The restoration process with the encrypted client data is carried out, for example, when the user has lost both the authenticated device 100 and the user terminal 200 or has had them broken down after the above encryption backup process. It is assumed that in this case, the user prepares a new authenticated device and a new user terminal.

Subsequently, the initializing process for using the authenticated device 100, the second-order issue process, is executed between the authenticated device 100 and the server 300. Thereafter, the encrypted client data backed up in the server 300 is decrypted and the decrypted client data is stored in the new user terminal 200, thereby restoring the previous state.

In the authority setting process, setting necessary for executing emergency restoration by the emergency restoration authority is carried out.

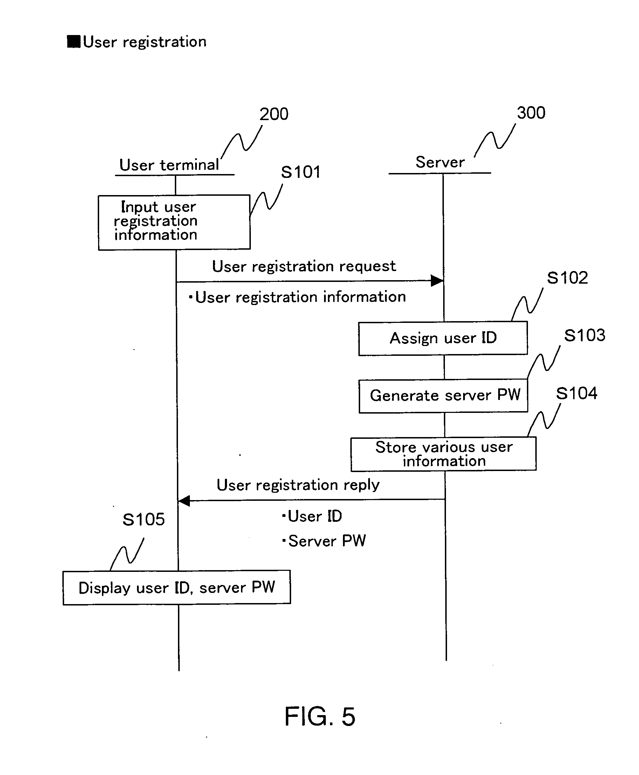

FIG. 5 shows the process flow of the user registration process. Data arrangement in the system before the user registration process is as follows. See the column marked as "initial state" in FIG. 4. The device key, the emergency restoration insurer key, the users organization key, the authority information list, and the users organization ID are stored in the authenticated device 100. Note that if the storing of the authority information list in the authenticated device has been omitted in the first-order issue process, the authority information list is not kept. In the user terminal 200, client data for the user is stored. On the other hand, no data about the present system is stored in the server 300.

The user terminal 200 receives user-registration information such as name and address from the user 110 via its input apparatus 206 (input interface) (step S101). Thereafter, the user terminal 200 sends the server 300 a user-registration request message containing the user-registration information.

When receiving the message, the server 300 generates an ID unique to each user and assigns it as a user ID to the user (step S102). Next, the server 300 generates a server password (hereinafter, password is written as "PW" for short) inherent to the user ID that is authentication information for preventing accesses of unauthorized users, from random numbers, for example (step S103). Thereafter, the user-registration information, user ID, and sever PW are stored as user information in the external storage apparatus 304 of the server 300 (step S104). And the server 300 sends a user-registration reply message containing the user ID and sever PW to the user terminal 200.

The user terminal 200 receives that message and displays the received user ID and sever PW on the display apparatus 207 (step S105). At this time, the user 110 stores the user ID and sever PW displayed on the display apparatus 207 in, for example, a predetermined record medium and secretly holds and manages it on his own.

In the above user-registration process, the user 110 him/herself may input both or either of the user ID and sever PW instead of the server 300 generating them. In this case, steps S102 and S103 will be omitted. The server 300 confirms whether the user ID inputted by the user 110 has been already registered by another user, and if already registered, repeats requesting for the input of a user ID until a unique user ID is input.

After the execution of the user-registration process, the server 300 stores the user-registration information, user ID, and sever PW therein in addition. See FIG. 4.

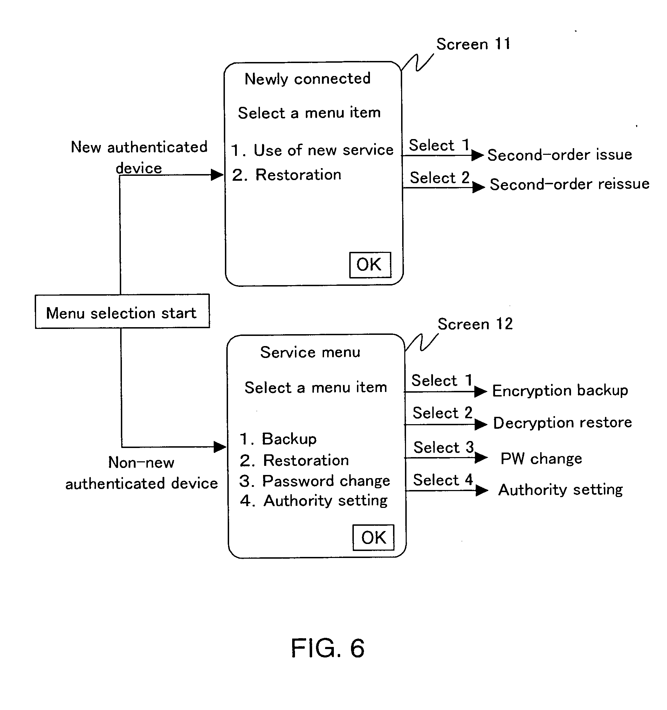

Next, the flow of a process of menu selection after the user-registration process will be explained. FIG. 6 is a view showing screen transition of the user terminal 200 in the menu selection. Suppose that the screen is the display screen of, e.g., a cellular phone.

After the start of the menu selection process, the user terminal 200 sends a new authenticated device confirmation request message to the authenticated device 100. After receiving the message, the authenticated device 100 determines whether itself is a new authenticated device and sends a new authenticated device confirmation reply message containing the determining result to the user terminal 200. It is noted that the new authenticated device 100 refers to an authenticated device 100 on which the first-order issue process has been performed.

It is determined whether it is a new authenticated device based on data in the authenticated device that has a change therein between before and after the second-order issue process or the second-order reissue process, for example, based on whether an encryption/decryption key described later is stored in memory 102.

For example, when an authenticated device 100 reissued after the previous one was lost is connected to the user terminal 200, the user terminal 200 can determine whether the authenticated device 100 has been reissued after the previous one was lost by examining, e.g., whether no client data exists in the user terminal 200 or by examining whether reissue data exists in the server 300. The obtained information about loss history is output to the display apparatus 207 of the user terminal 200. In this case, since the second-order reissue process is necessary, "2. Restoration process" is highlighted or only this item is displayed in screen 11 in the example of FIG. 6, thereby leading the user to the second-order reissue process.

After receiving the new authenticated device confirmation reply message, if the authenticated device 100 is a new authenticated device, the user terminal 200 displays screen 11 on the display apparatus 207, or if not, screen 12, and accepts the selection of a menu item to be used.

When, in screen 11, "1. Use of new service" is selected, process proceeds to the second-order issue process. When, in screen 12, "1. Backup" is selected, process proceeds to the encryption backup process; when "2. Restore" is selected, to a decryption restoration process; when "3. Password change" is selected, to a PW change process; and when "4. Authority setting" is selected, to the authority setting process. These processes will be described later.

Where emergency restoration is not implemented, the menu item "4. Authority setting" will be omitted in screen 12.

Next, the backup process of client data will be described. The backup process of client data refers to a process of encrypting and backing up various data necessary for restoration in the server 300 in case the authenticated device 100 or the user terminal 200 is broken down or lost. This process is divided into two processes: the second-order issue process and encryption backup process. The second-order issue process backs up reissue data and the like necessary for decryption restoration of client data in the server 300, and the encryption backup process encrypts client data in the user terminal 200 and backs up the encrypted client data in the server 300.

While, in this embodiment, data is backed up in the server 300, the data may be backed up in the user terminal 200.

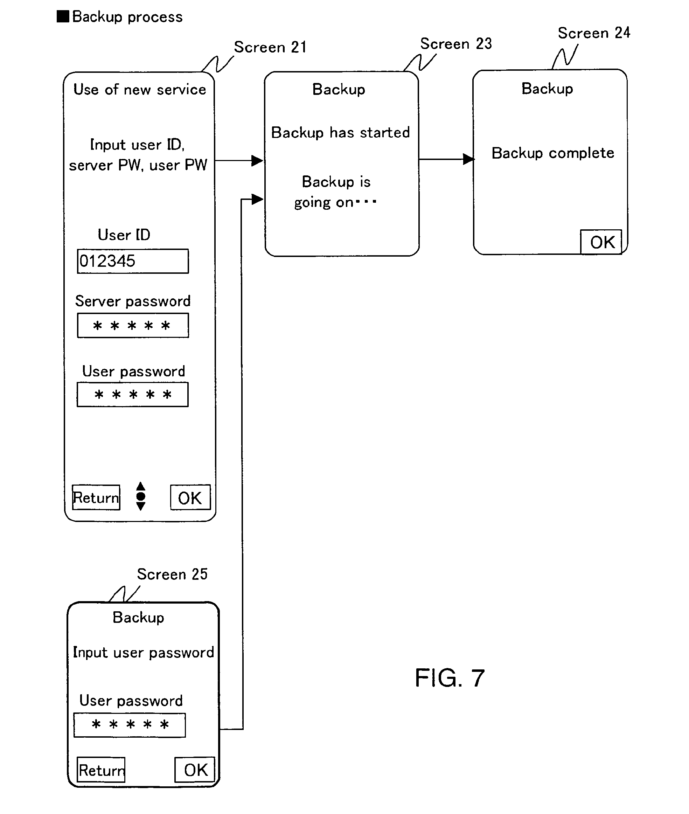

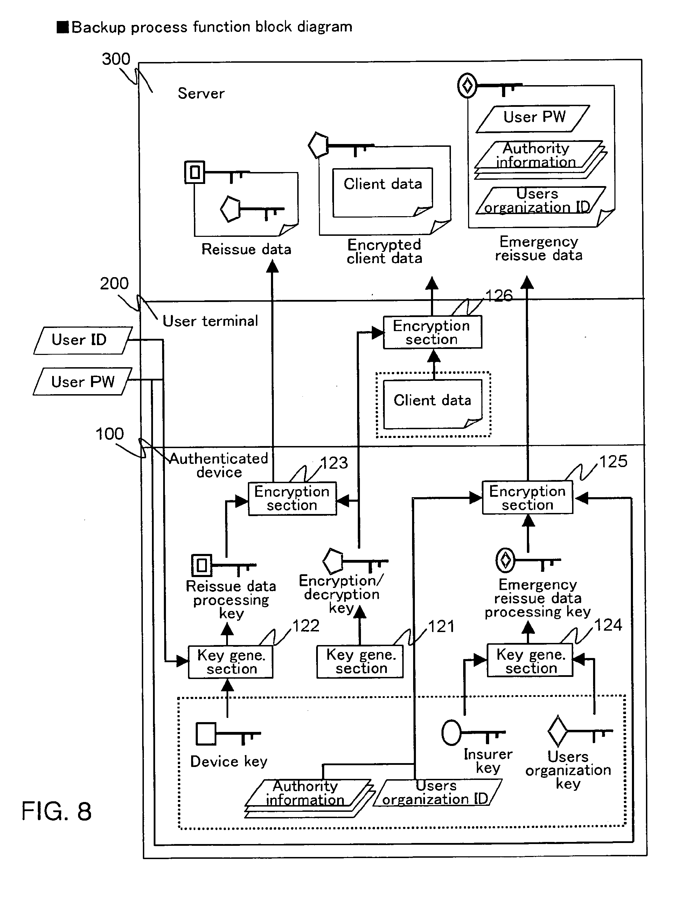

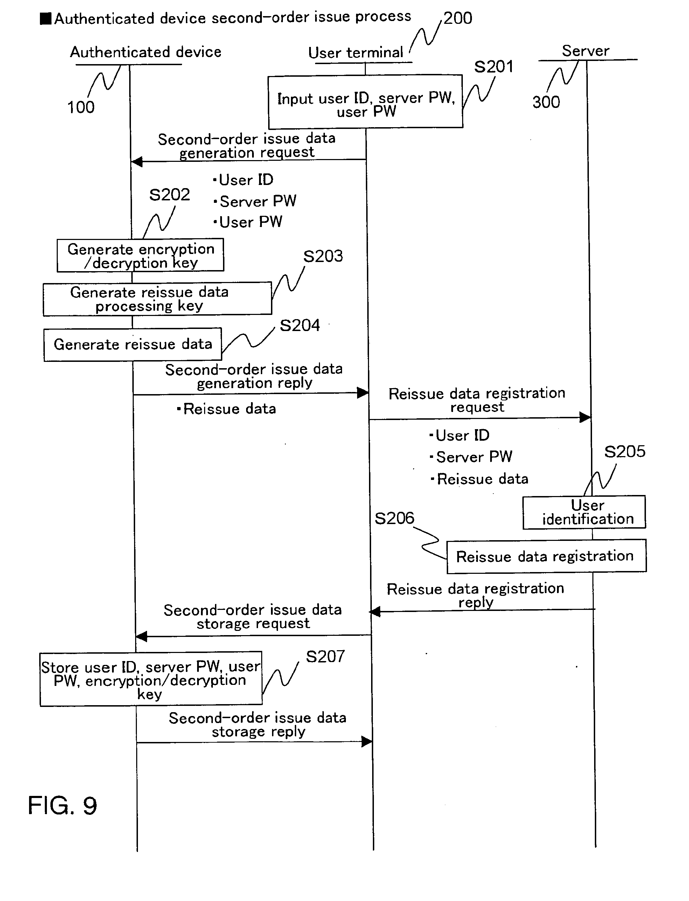

FIG. 7 shows a view of the screen of the user terminal 200 in the backup process of client data and FIG. 8 shows a function block diagram. The function sections in the function block diagram of FIG. 8 carry out the invention. In each step, the function section that executes the step will be mentioned. Suppose that the screens in FIG. 7 are the display screen of, e.g., a cellular phone. The second-order issue process in the authenticated device 100 will be described below using FIGS. 7, 8, and 9 (the process flow thereof).

The user terminal 200 displays a screen 21 on the display apparatus 207 and receives user ID, sever PW, user PW from the user 110 (step S201). The user PW is arbitrarily set by the user 110, and is user identification information for preventing others from using the authenticated device 100 in an unauthorized manner.

While user PW is used in this embodiment, instead living body authentication using information about the user's living body may be performed. The living body information is such as a fingerprint, a sign, or an iris pattern.

After receiving data from the user 110, the user terminal 200 sends a second-order issue data generation request message containing the user ID, sever PW, and user PW to the authenticated device 100.

Having received the message, the authenticated device 100 temporarily stores the user ID, sever PW, and user PW in memory 102. Next, the encryption/decryption key is generated by, e.g., generating random numbers (step S202, a key generation section 121). Next, a reissue data processing key is generated from the user ID, user PW, and device key (step S203, a key generation section 122).

It is possible that in this generation process, HMAC (keyed hash algorithm) is applied to joined data of the user PW and user ID as input data with the device key as key data and that the output is used as the reissue data processing key. Alternatively, a hash function (SHA1, MD5, or the like) may be applied to joined data of the user PW and user ID, and a common key cipher algorithm (DES, AES, or the like) is applied to the hash-applied, joined data as input data with the device key as key data, and the output may be used as the reissue data processing key. Furthermore, any algorithm that can prevent the generation or estimation of the reissue data processing key when user PW or the device key is unknown can be applied to the above generation process.

Then, the encryption/decryption key is encrypted with the reissue data processing key to generate reissue data (step S204, an encryption section 123).

Thereafter, the authenticated device 100 sends the user terminal 200 a second-order issue data generation reply message containing the reissue data. Such data is encrypted by applying the common key cipher algorithm (DES, AES, or the like).

After receiving that message, the user terminal 200 sends the server 300 a reissue data registration request message containing the user ID, server PW, and the reissue data.

Having received the reissue data registration request message, the server 300 determines whether the user is an authorized user by comparing the user ID and server PW contained in the received message with user ID and server PW stored in the external storage apparatus 304 (step S205). If it is determined that the user is an authorized user, the server 300 stores the received reissue data in a data storage area identified uniquely by the user ID and individually for the user 110 (step S206). Furthermore, the server 300 sends a reissue data registration reply message to the user terminal 200.

After receiving that message, the user terminal 200 sends the authenticated device 100 a second-order issue data storage request message.

After receiving that message, the authenticated device 100 stores the user ID, server PW, user PW, and the encryption/decryption key statically in memory 102 (step S207), and sends the user terminal 200 a second-order issue data storage reply message and finishes the process.

After the second-order issue process finishes, the user ID, server PW, user PW, and the encryption/decryption key are kept in the authenticated device 100, and the reissue data is kept in the server 300. See FIG. 4.

Next, the encryption backup process subsequent to the second-order issue process will be described. When the encryption backup process is performed for the first time after the second-order issue process, it is performed subsequent to the second-order issue process. However, when the encryption backup process is performed for the second time or later, only the encryption backup process is performed independently.

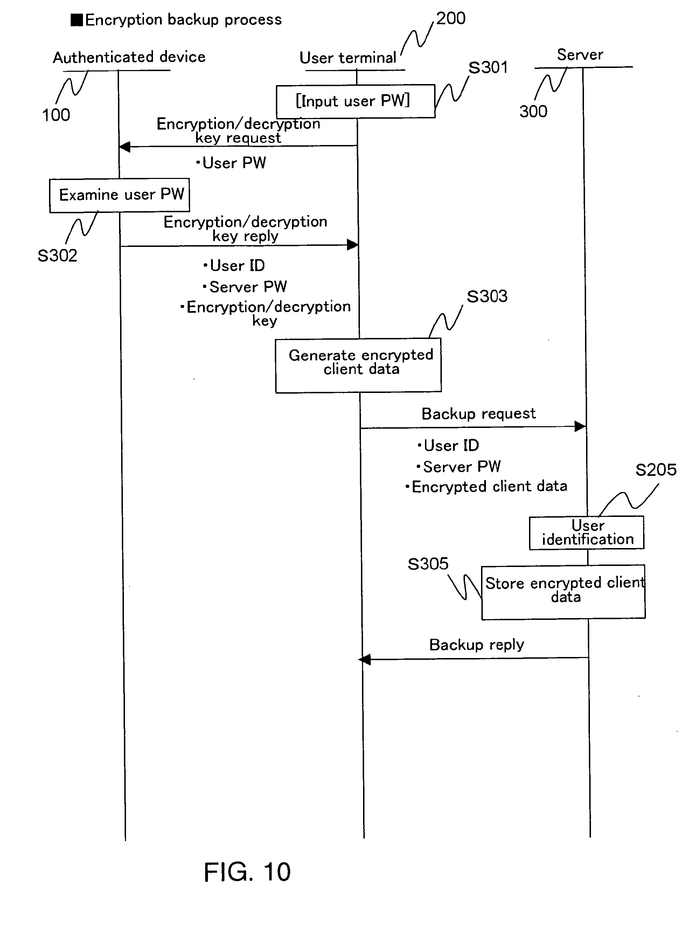

FIG. 10 shows the process flow of the client data encryption backup process. The user terminal 200 displays a screen 25 (FIG. 7) on the display apparatus 207 and accepts user PW from the user (step S301). Note that in a first time backup after the second-order issue process, because user PW has been already input in the second-order issue process, this step can be omitted.

After accepting user PW, the user terminal 200 displays a screen 23 on the display apparatus 207 and sends a request message for an encryption/decryption key, etc. containing the user PW to the authenticated device 100.

Having received that message, the authenticated device 100 examines the authenticity of the received user PW by comparing the user PW with user PW stored in memory 102 (step S302). If the examining result indicates that the user PW is correct, the authenticated device 100 sends the user terminal 200 an encryption/decryption key reply message containing the user ID, server PW, and the encryption/decryption key that have been stored in memory 102.

Note that although omitted in the flow of FIG. 10, even if the user PW is false, the processes of step S301 and later may be repeated up to a predetermined number of times (accepting user PWs). Here, if a false user PW is input a greater number of times than the predetermined number, the authenticated device 100 does not execute the later processes at all.

After receiving the encryption/decryption key, etc., reply message, the user terminal 200 encrypts the client data stored in the user terminal 200 with the encryption/decryption key (step S303, an encryption section 126) to generate encrypted client data. Thereafter, the user terminal 200 sends the server 300 a backup request message containing the user ID, server PW, and the encrypted client data.

Note that step S303 may be executed in the authenticated device 100 instead of in the user terminal 200. In this case, the above process flow will be changed as follows. The user terminal 200 sends the authenticated device 100 the encryption client data generation request message containing the user PW and the client data, instead of the request message for the encryption/decryption key, etc.,. After receiving that message, the authenticated device 100 executes step S302 to examine the user PW, and if the user PW is correct, executes step S303 using the encryption/decryption key stored in memory 102. Thereafter, the authenticated device 100 sends the user terminal 200 the encryption client data generation reply message containing the user ID, server PW and the encrypted client data, instead of the reply message of the encryption/decryption key, etc. After receiving that message, the user terminal 200 sends the server 300 a backup request message without executing step S303.

After receiving the backup request message, the server 300 performs the user identification (step S305). If it is determined that the user is an authorized user, the server 300 stores the received, encrypted client data in a data storage area identified uniquely by user ID and individually for the user (step S305), while sending a backup reply message to the user terminal 200. Having received that message, the user terminal 200 displays a screen 24 on the display apparatus 207 and finishes the process.

After this encryption backup process finishes, the encrypted client data is kept in the server 300 (see FIG. 4).

Although, in this embodiment, client data is kept in the user terminal 200 from the initial state up to the end of the encryption backup (see FIG. 4), it may not be kept.

As described above, the server 300 stores the reissue data together with the encrypted client data. The reissue data is data obtained by encrypting the encryption/decryption key for encryption/decryption of client data with the reissue data processing key. By encrypting the encryption/decryption key and backing up, the server operator 220 is prevented from decrypting encrypted client data in an unauthorized manner.

Although, in this embodiment, only client data in the user terminal 200 is encrypted and backed up, only client data in the authenticated device 100 or both may be encrypted and backed up. In either case, a step where data is sent from the authenticated device 100 to the user terminal 200 needs to be added.

Although, in this embodiment, client data is encrypted with the encryption/decryption key in the process flow of encryption backup (step S303), client data may be encrypted with the reissue data processing key.

In this case, the encryption/decryption key is not necessary. Hence, a series of processes from the second-order issue data generation request message up to the second-order issue data generation reply message will be omitted from the flow of the second-order issue process, and instead of the reissue data registration request message, a user identification request message containing user ID and server PW is sent. Further, step S206 will be omitted and instead of the reissue data registration reply message, a user identification reply message is sent. Yet further, the encryption/decryption key is omitted in step S207.

Then, in the encryption backup process, the authenticated device 100 generates a reissue data processing key after the execution of step S302 (step S203), and makes the encryption/decryption key, etc., reply message contain the reissue data processing key instead of the encryption/decryption key.

Although, in this embodiment, the reissue data processing key is generated from the device key and user PW, this generation may be performed without the device key. In this case, the result of applying a hash function to the user PW is used as the reissue data processing key. The hash function is, for example, SHA1 or MD5.

Next, the authority setting process will be described. The authority setting process comprises a process of editing an authority information list including authority IDs and a process of storing emergency reissue data necessary for emergency restoration in the server 300. Where emergency restoration is not implemented, the authority setting process will be omitted.

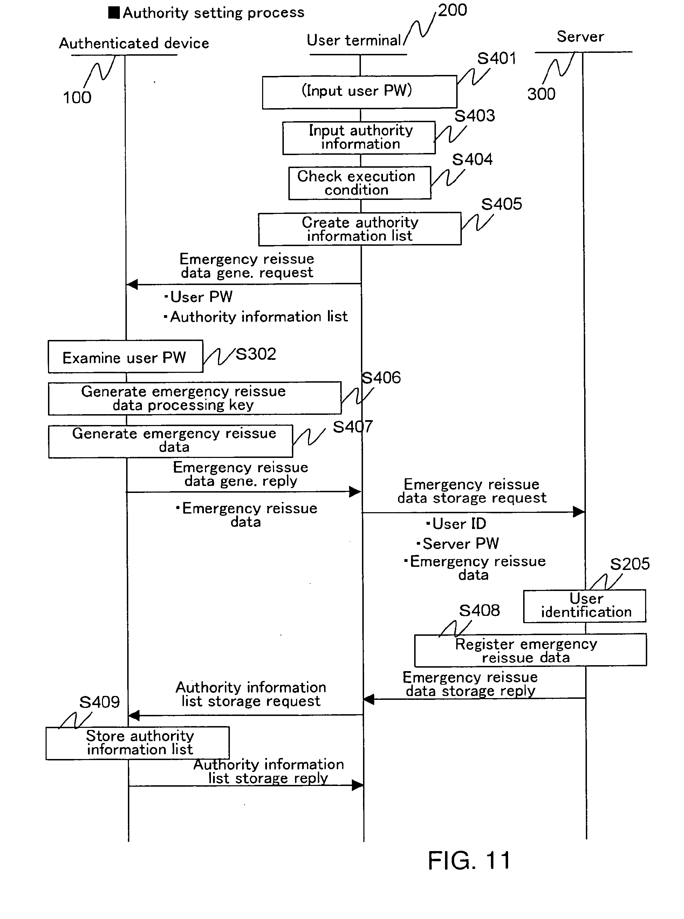

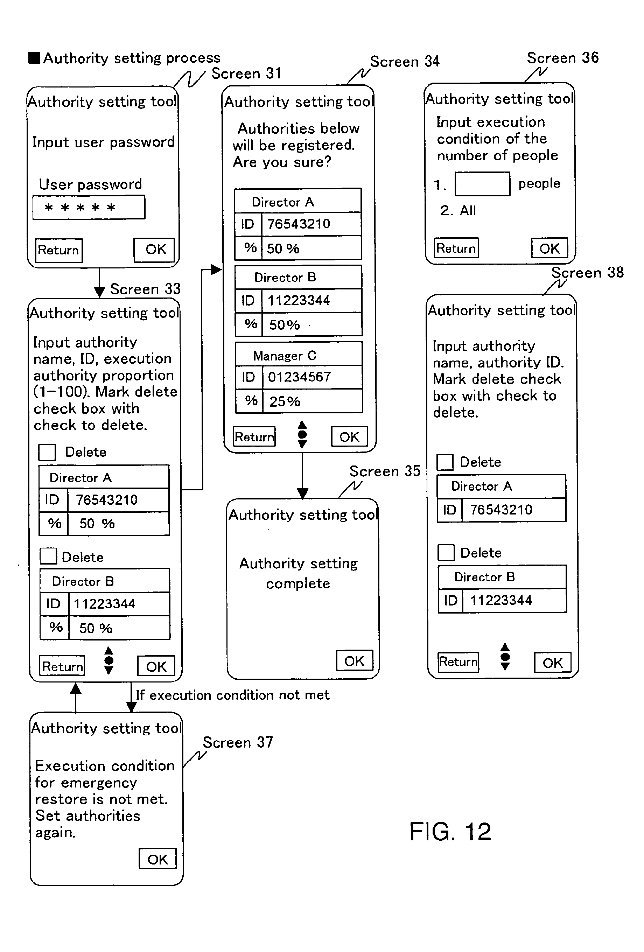

FIG. 11 shows the process flow of the authority setting process, and FIG. 12 shows a screen transition view. The user terminal 200 displays a screen 31 on the display apparatus 207 and accepts user PW from the user (step S401). Then, the user terminal 200 displays a screen 33 and receives authority information such as authority names, authority IDs, and execution authority proportions from the user 110 (step S403).

Here, the execution authority proportions indicate execution-of-emergency-restoration authority proportions for a plurality of authorities 550. The plurality of authorities 550 are assigned the respective proportions, and if total approval of 100 % or more is not obtained in the execution of the emergency restoration process, the emergency restoration process cannot be completed. For example, suppose that the authority proportion for authority A550 is 100 %, and the authority proportion for authority B550 is 50 %. Authority A550 can complete the emergency restoration process on his own, while authority B550 cannot complete the process without another authority with whom authority proportions total 100 % or more.

The screen 33 displays the contents of the authority information list already stored and allows the user to edit authority information such as to delete an authority as well as to input authority information.

After the authority information of the user 110 is input, the user terminal 200 determines whether it is possible to execute emergency restoration with the authority information pieces about the plurality of authorities (step S404), and if possible, displays a screen 34 on the display apparatus 207 and asks for the confirmation of the user 110. If not possible, the user terminal 200 displays a screen 37 on the display apparatus 207 and repeats the processes from step S403. If the execution is possible, after asking for the confirmation of the user 110, the user terminal 200 creates an authority information list by joining the authority information pieces about the plurality of authorities (step S405).

Thereafter, the user terminal 200 sends the authenticated device 100 an emergency reissue data generation request message containing the user PW and the authority information list.

After receiving the emergency reissue data generation request message, the authenticated device 100 examines the user PW (step S302), and if the user PW is correct, generates an emergency reissue data processing key from the emergency restoration insurer key and the users organization key (step S406, a key generation section 124). This generation is achieved by joining the emergency restoration insurer key and the users organization key and applying a hash function thereto. Any algorithm that can prevent the generation and estimation of the emergency reissue data processing key when the insurer key or the users organization key is unknown can be applied.

Note that either the emergency restoration insurer key or the users organization key may be omitted, or for each of them a plurality of the keys may exist.

Next, the authenticated device 100 encrypts joined data of the user PW, the authority information pieces, and the users organization ID with the emergency reissue data processing key to generate emergency reissue data (step S407, an encryption section 125). Note that the users organization ID may be omitted. In step S407, instead of the user PW, reissue data or the encryption/decryption key may be used. The authenticated device 100 sends the user terminal 200 an emergency reissue data generation reply message containing the emergency reissue data.

After receiving that message, the user terminal 200 sends the server 300 an emergency reissue data storage request message containing the user ID, server PW, and the emergency reissue data.

After receiving that message, the server 300 identifies the user (step S205), and if determining that the user is authorized, stores the received, emergency reissue data in a data storage area identified uniquely by user ID and individually for the user (step S408) while sending an emergency reissue data storage reply message to the user terminal 200.

Having received that message, the user terminal 200 sends an authority information list storage request message to the authenticated device 100. After receiving that message, the authenticated device 100 stores the authority information list statically in memory 102 (step S409). Thereafter, the authenticated device 100 sends an authority information list storage reply message to the user terminal 200. After receiving that message, the user terminal 200 displays a screen 35 on the display apparatus 207 and finishes the process.

Note that in step S403 an execution condition of the number of people may be set instead of the execution authority proportions for emergency restoration. The execution condition of the number of people is the number of to-approve authorities necessary for the execution of emergency restoration. For example, when the condition of the number of people is set at three, the execution of emergency restoration is not possible without approval from three authorities.

Where the execution condition of the number of people is set, after step S401, the user terminal 200 displays a screen 36 on the display apparatus 207 and accepts the input of the condition of the number of people. In screen 36, either "1.", where the condition of the number of people is set at any number that is one or greater, or "2. All" is selected. If "2. All" is selected, emergency restoration will not be executed without approval from all authorities.

Next, the user terminal 200 displays a screen 38 and executes step S403, the input of authority proportions being omitted. The later processes are the same as in the case of setting authority proportions. Note that the authority information list contains data of the execution condition of the number of people but not the authority proportions.

By the authority setting process as above, the user 110 can set the execution condition for emergency restoration flexibly and deal with the change in authority information such as adding or changing an authority.

Furthermore, depending on the management policy of the organization that the user belongs to, the user 110 may be prohibited from setting authorities 550. In this case, the storing of the authority information list in the authenticated device 100 is indispensable in the first-order issue process, and further, in the above authority setting process, the processes of steps S403, S404, S405 will be omitted and the authority information list will be omitted from the emergency reissue data generation request message. Moreover, the processes of the sending of the authority information list storage request message and later will be omitted. Where the user 110 setting authorities 550 is prohibited, the authority setting process may be included in the second-order issue process.

Next, the restoration process of client data will be described. The restoration process of client data is, for example, a process executed when both the authenticated device 100 and the user terminal 200 are lost or broken down after the encryption backup process of client data. In this case, data is restored in a new authenticated device and a new user terminal 200 prepared by the user. This restoration process of client data is divided into two processes: the second-order reissue process and decryption restoration process. The second-order reissue process puts the authenticated device 100 in a state of after the second-order issue process, and the decryption restoration process restores client data in the user terminal 200.

Note that while this embodiment describes the case where data is backed up in the server 300, if backed up in the user terminal 200, the restoration process is performed with data from the user terminal 200 instead of the server 300.

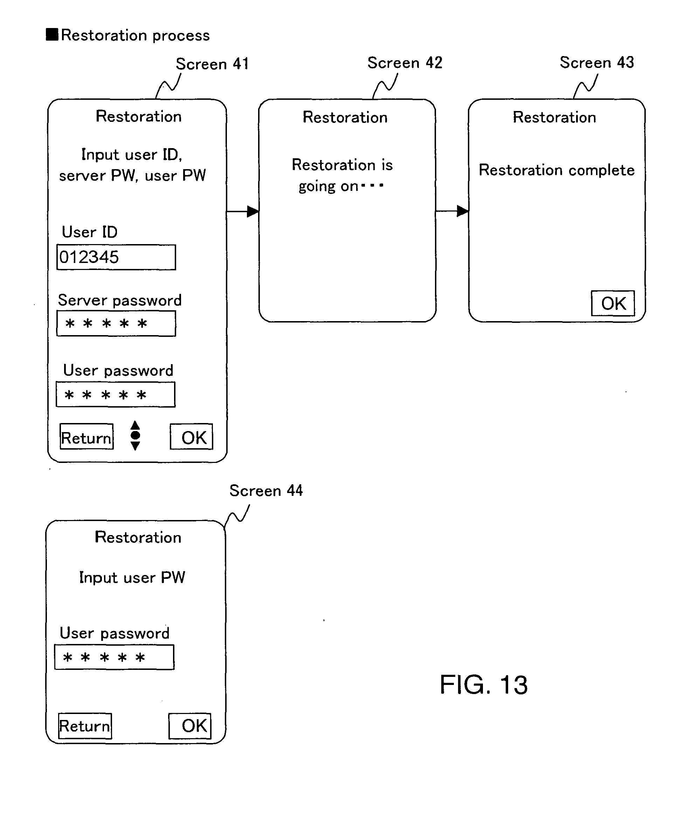

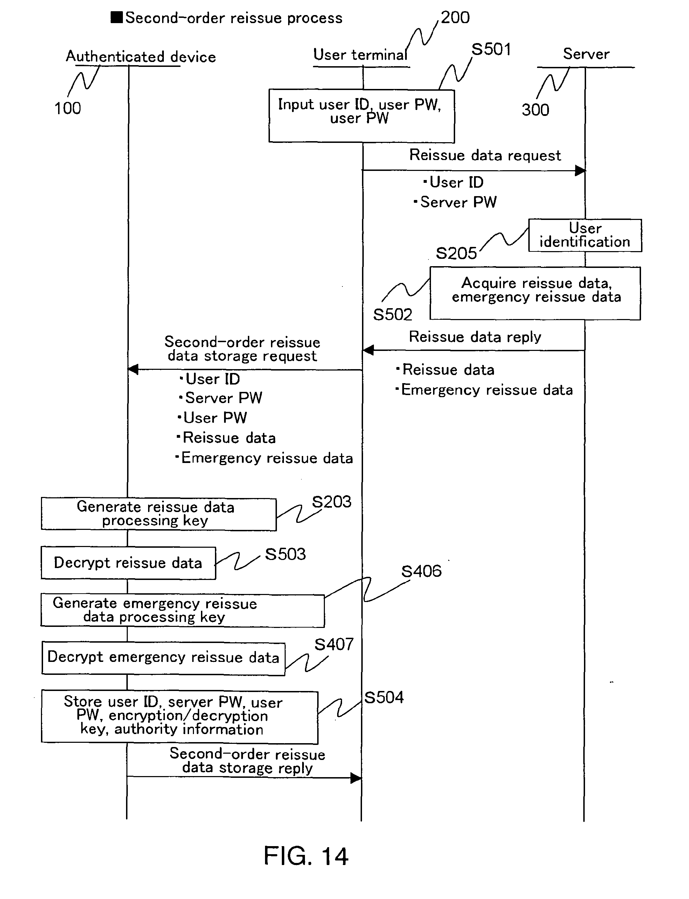

FIG. 13 shows the screen of the user terminal 200. Suppose that the screen of FIG. 13 is, for example, the display screen of a cellular phone. FIG. 14 shows the process flow of the second-order reissue process by the authenticated device 100.

The user terminal 200 displays a screen 41 on the display apparatus 207 and accepts the input of user ID, server PW, and user PW from the user 110 (step S501). Thereafter, the user terminal 200 displays a screen 42 on the display apparatus 207 and sends the server 300 a reissue data request message containing user ID and server PW.

After receiving that message, the server 300 identifies the user using the user ID and server PW (step S205), and if the user identification is successful, acquires reissue data and emergency reissue data identified by the user ID from the external storage apparatus 304 (step S502), and then sends the user terminal 200 a reissue data reply message containing the reissue data and emergency reissue data.

Having received that message, the user terminal 200 sends the authenticated device 100 a second-order reissue data storage request message containing the user ID, server PW, user PW, the reissue data, and the emergency reissue data.

After receiving that message, the authenticated device 100 temporarily stores the user ID, server PW, user PW, the reissue data, and the emergency reissue data in memory 102. Next, the authenticated device 100 generates a reissue data processing key from the user ID and user PW, and the device key stored beforehand (step S203, a key generation section 122). Next, the reissue data is decrypted with the reissue data processing key to take the encryption/decryption key out (step S503). Then, the authenticated device 100 generates an emergency reissue data processing key from the emergency restoration insurer key and the users organization key (step S406), and decrypts the emergency reissue data with the emergency reissue data processing key to take the authority information list (step S407). Thereafter, the authenticated device 100 stores the user ID, server PW, user PW, encryption/decryption key, and authority information list statically in memory 102 (step S504), sends the user terminal 200 a second-order reissue data storage reply message, and finishes the process.

After the execution of the second-order reissue process, the user ID, server PW, user PW, encryption/decryption key, and authority information list are kept in addition in the authenticated device 100 (see FIG. 4). Note that where emergency restoration or the authority setting process is not implemented, the authority information list is not stored in addition.

If, in the above encryption backup process, the client data is encrypted with the reissue data processing key, the reissue data and the encryption/decryption key will be omitted.

Moreover, if the reissue data processing key is generated without the device key, the device key will be omitted in step S203.

Note that where emergency restoration is not implemented or the authority setting process is not performed beforehand, the emergency reissue data and the authority information list will be omitted.

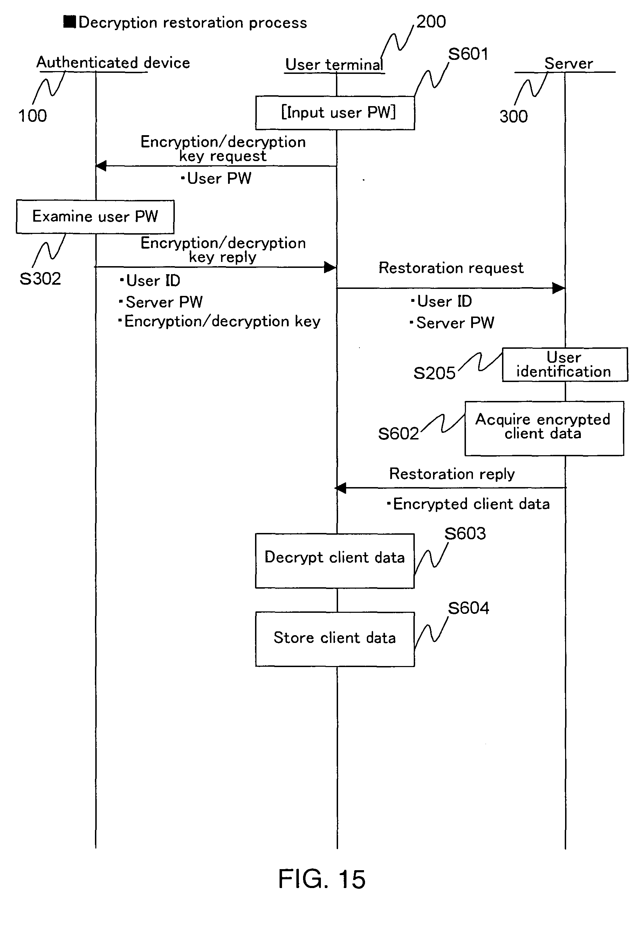

Next, the decryption restoration process subsequent to the above second-order reissue process will be described. When the decryption restoration process is performed for the first time after the second-order reissue process, it is performed subsequent to the second-order reissue process. However, when the decryption restoration process is performed for the second time or later, only the decryption restoration process is performed independently. FIG. 15 shows the process flow of the decryption restoration process. The user terminal 200 displays a screen 44 on the display apparatus 207 and accepts user PW from the user 110 (step S601). Note that in a first time restoration after the second-order reissue process, because user PW has been already input in the second-order reissue process, this step can be omitted.

After accepting user PW, the user terminal 200 sends the authenticated device 100 an encryption/decryption key, etc., request message containing the user PW.

After receiving that message, the authenticated device 100 examines the user PW (step S302), and if the user PW is correct, sends the user terminal 200 an encryption/decryption key, etc., reply message containing the user ID, server PW, and encryption/decryption key that have been stored in memory 102.

Note that although omitted in the flow of FIG. 15, even if the user PW is false, the processes of step S601 and later may be repeated up to a predetermined number of times (accepting user PWs). Here, if a false user PW is input a greater number of times than the predetermined number, the authenticated device 100 does not execute the later processes at all.

After receiving the encryption/decryption key reply message, the user terminal 200 sends the server 300 a restoration request message containing the user ID and server PW.

After receiving that message, the server 300 identifies the user using the user ID and server PW (step S205), and if successful, acquires encrypted client data identified by the user ID from the external storage apparatus 304 (step S602), and sends the user terminal 200 a restoration reply message containing the encrypted client data.

After receiving that message, the user terminal 200 decrypts the encrypted client data with the encryption/decryption key to take the client data out (step S603), stores it (step S604), displays a screen 43 on the display apparatus 207, and finishes the process.

Note that step S603 may be executed in the authenticated device 100 instead of the user terminal 200, in which case the above process flow will be changed as follows.

The user terminal 200 sends the authenticated device 100 a user ID, etc., request message containing the user PW instead of the encryption/decryption key, etc., request message.

After receiving that message, the authenticated device 100 performs step S302, and sends the user terminal 200 a user ID, etc., reply message containing the user ID and server PW instead of the encryption/decryption key, etc., reply message.

After receiving a restoration reply message from the server 300, the user terminal 200 sends the authenticated device 100 a client data decryption request message containing the encrypted client data.

After receiving that message, the authenticated device 100 performs step S603 and sends the user terminal 200 an encrypted client data decryption reply message containing the client data.

Having received that message, the user terminal 200 performs step S604 and finishes the process.

Where in the encryption backup process, data in the authenticated device 100 is backed up as well as client data in the user terminal 200, the process flow of the decryption restoration will be changed as follows.

After the execution of step S603, the user terminal 200 sends the authenticated device 100 an authenticated device data storage request message containing data to be in the authenticated device.

After receiving that message, the authenticated device 100 stores the authenticated-device's data in memory 102 and sends the user terminal 200 an authenticated device data storage reply message. Having received that message, the user terminal 200 performs step S506 and finishes the process. Note that if, in the encryption backup process, only data in the authenticated device is backed up but not client data in the user terminal 200, step S506 will be omitted.

If, in the encryption backup process, the client data is encrypted with the reissue data processing key instead of the encryption/decryption key, the user terminal 200 sends the authenticated device 100 a reissue data processing key, etc., request message containing user PW instead of an encryption/decryption key, etc., request message.

After receiving that message, the authenticated device 100 generates a reissue data processing key from the user ID, user PW, and device key, and thereafter, sends the user terminal 200 a reissue data processing key, etc., reply message containing the user ID, server PW, and the reissue data processing key instead of the encryption/decryption key, etc., reply message.

After the execution of the decryption restoration process, the client data is kept in the user terminal 200 (see FIG. 4).

As described above, by using reissue data in the decryption restoration of client data, backup and restoration can be performed without allowing the server to know the contents of the client data.

Furthermore, the reissue data processing key to encrypt and decrypt reissue data is generated from user ID, user PW, the device key common to all authenticated devices, and the like. Because of using user ID, the key is generated individually for the user and because of using user PW, only a person who knows the user PW can generate the key. Moreover, because of using the device key, an authenticated device 100 is indispensable for generating the reissue data processing key, thus protecting against a trying-every-password attack via a PC. Hence, the reissue data processing key can be generated safely.

Yet further, since the device key is common to all authenticated devices, an authenticated device 100 individual for each user 110 need not be issued. Hence, it is easy to issue authenticated devices 100.

As opposed to this, the device key may be an individual key not common to all authenticated devices. In this case, the device key is a key individual for each user 110, and thus the reissue data processing key can be generated more safely than with the present embodiment, but issuing an authenticated device 100 is complex. For example, when a user lost his authenticated device 100, the same device key as that set in the authenticated device 100 needs to be set in a new authenticated device 100 to be issued.

Next, the process of changing user PW after the encryption backup process of client data will be described. Note that where client data has been encrypted with the reissue data processing key in the data backup process, a process different from the following process of changing user PW is needed.

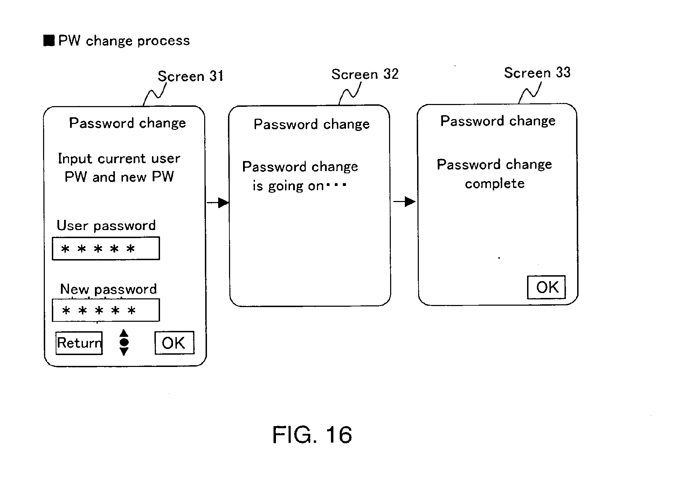

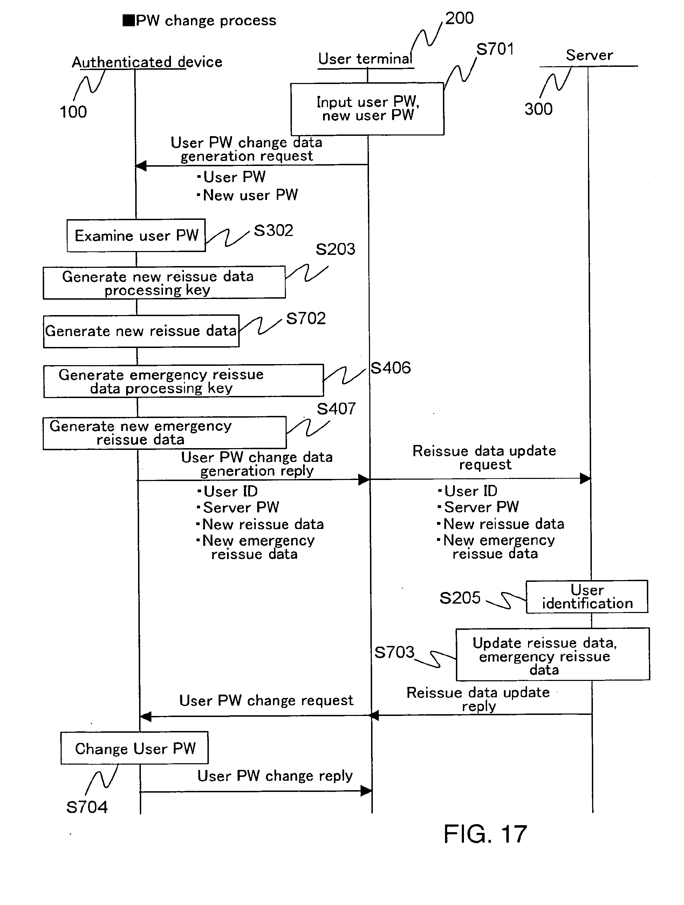

FIG. 16 shows a screen view of the user PW changing process and FIG. 17 shows the process flow of the user PW changing process. Suppose that the screen of FIG. 16 is, for example, the display screen of a cellular phone.

The user terminal 200 displays a screen 31 on the display apparatus 207 and accepts a user PW (second password) and a new user PW (third password) from the user 110 (step S701). Thereafter, the user terminal 200 displays a screen 32 on the display apparatus 207, and sends the authenticated device 100 a user PW change data generation request message containing the user PW and new user PW.

After receiving that message, the authenticated device 100 temporarily stores the user PW and new user PW in memory 102, and performs the user PW examination (step S302). As a result of this examination, if the user PW is correct, the authenticated device 100 generates a new reissue data processing key from the device key, user ID, and new user PW stored in memory 102 (step S203).

Note that although omitted in the flow of FIG. 17, even if the user PW is false, the processes of step S701 and later may be repeated up to a predetermined number of times (accepting user PWs) . Here, if a false user PW is input a greater number of times than the predetermined number, the authenticated device 100 does not execute the later processes at all.

Next, the authenticated device 100 encrypts the encryption/decryption key with the new reissue data processing key to generate a new reissue data (step S702), and then, generates an emergency reissue data processing key from the emergency restoration insurer key and the users organization key (step S406), and encrypts joined data of the new user PW, authority information list, and users organization ID with the emergency reissue data processing key to generate new emergency reissue data (step S407). Thereafter, the authenticated device 100 sends the user terminal 200 a user PW change data generation reply message containing the user ID, server PW, the new reissue data and the new emergency reissue data.

After receiving that message, the user terminal 200 sends the server 300 a reissue data update request message containing the user ID, server PW, the new reissue data and the new emergency reissue data.

After receiving that message, the server 300 identifies the user using the user ID and server PW (step S205), and if successful, replaces the reissue data with the new reissue data and the emergency reissue data with the new emergency reissue data (step S703), and sends the user terminal 200 a reissue data update reply message.

After receiving that message, the user terminal 200 sends the authenticated device 100 a user PW change request message.

After receiving that message, the authenticated device 100 replaces the user PW stored in memory 102 with the new user PW (step S704), sends the user terminal 200 a user PW change reply message, displays a screen 33 on the display apparatus 207, and finishes the process.

Where emergency restoration is not implemented, steps S406 and S407 will be omitted. Also, the new emergency reissue data will be omitted from the user PW change data generation reply message and the reissue data update request message, and thus the emergency reissue data is not updated in step S703.

Note that where the reissue data processing key is generated without the device key, the device key will be omitted in step S203.

Moreover, if in step S407 of the authority setting process the emergency reissue data is generated by encrypting not password but the reissue data processing key, step S407 of the PW change process encrypts the new reissue data processing key to be new emergency reissue data.

If in step S407 of the authority setting process the emergency reissue data is generated by encrypting not password but the encryption/decryption key, steps S406, S407 of the PW change process will be omitted. Also, the new emergency reissue data will be omitted from the user PW change data generation reply message and the reissue data update request message, and thus the emergency reissue data is not updated in step S703.

Next, the emergency restoration process will be described. The emergency restoration process is a process which restores client data for user 110 according to instructions from an emergency restoration authority 550 having authority to restore forcibly where, having encountered an accident, it is impossible for the user 110 to restore client data on his own. Note that this process cannot be performed where the user 110 has not performed the authority setting process. Moreover, more than one emergency restoration authority exists for each user.

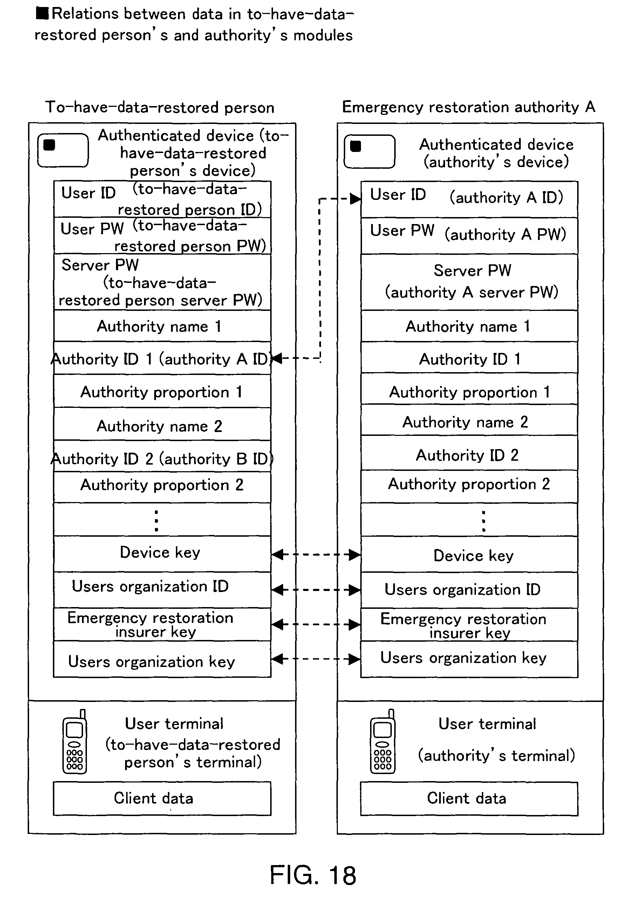

For distinction of description, let the user terminal 200 possessed by the emergency restoration authority 550 be referred to as an authority terminal 200, the authenticated device 100 be an authority authenticated device 100, the user ID of the emergency restoration authority 550 be an authority ID, the user PW be an authority PW, and the server PW be an authority server PW. The authority ID is the same as one of a plurality of authority IDs listed in the authority information list held in the authenticated device 100 possessed by the user 110. And let the user 110 subject to emergency restoration be referred to as a to-have-data-restored person 110, the user ID of the to-have-data-restored person 110 be a to-have-data-restored person ID, and the user PW be a to-have-data-restored person PW. FIG. 18 is a view showing data stored in the authenticated device 100 and the user terminal 200 possessed by each of the to-have-data-restored person 110 and an emergency restoration authority A550. The emergency restoration authority A is one of emergency restoration authorities of the to-have-data-restored person 110. In the Figure, a dashed arrow joining data indicates that both the data are the same in content. Note that if in the authority setting process the execution condition for emergency restoration is the execution condition of the number of people, the authority proportion data will be omitted from the authority information in the Figure, and instead the execution condition of the number of people data will be written.

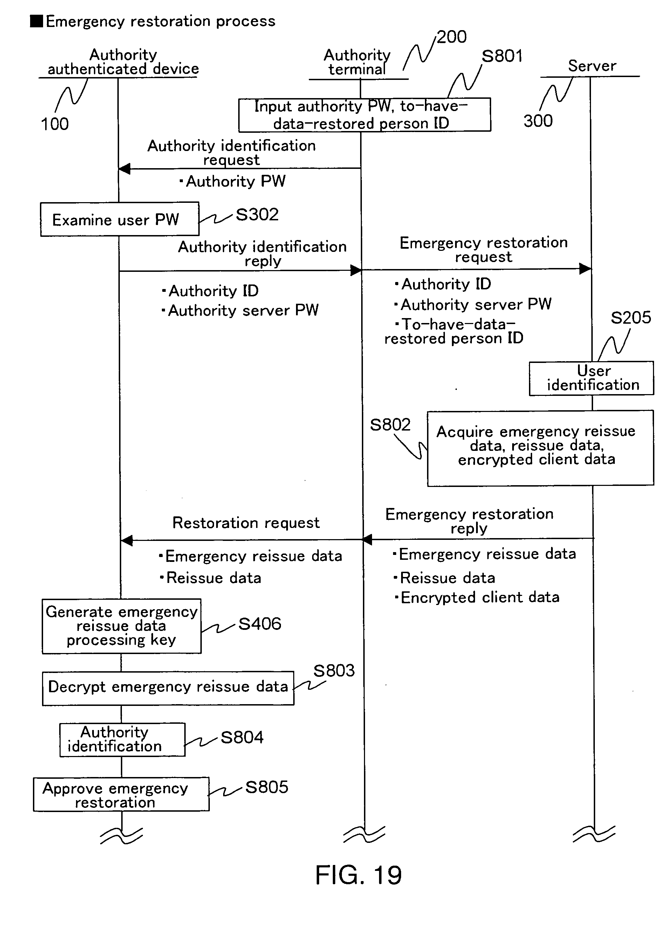

The emergency restoration process will be described below with reference to the process flow shown in FIG. 19 where one emergency restoration authority 550 performs emergency restoration. The authority terminal 200 accepts an authority PW and to-have-data-restored person ID from the authority 550 (step S801). Thereafter, the authority terminal 200 sends the authority authenticated device 100 an authority examination request message containing the authority PW.

After receiving that message, the authority authenticated device 100 compares the received authority PW and the authority PW stored in memory 102 to examine the correctness of the authority PW (step S302), and if the authority PW is correct, sends the authority terminal 200 an authority examination reply message containing the authority ID and authority server PW.

After receiving that message, the authority terminal 200 sends the server 300 an emergency restoration request message containing the authority ID, authority server PW, and the to-have-data-restored person ID.

After receiving that message, the server 300 identifies the user using the authority ID and authority server PW (step S205), and if successful, acquires emergency reissue data for the to-have-data-restored person identified by the to-have-data-restored person ID, reissue data for the to-have-data-restored person, and encrypted client data for the to-have-data-restored person (step S802), and sends the authority terminal 200 an emergency restoration reply message containing the acquired emergency reissue data, reissue data, and encrypted client data.

After receiving that message, the authority terminal 200 sends the authority authenticated device 100 a restoration request message containing the emergency reissue data and reissue data.

After receiving that message, the authority authenticated device 100 generates an emergency reissue data processing key from the emergency restoration insurer key and users organization key stored in memory 102 and temporarily stores it in memory 102 (step S406). Then, the authority authenticated device 100 decrypts the emergency reissue data with the emergency reissue data processing key to take out the to-have-data-restored person PW, authority information list, and users organization ID and temporarily store in memory 102 (step S803).

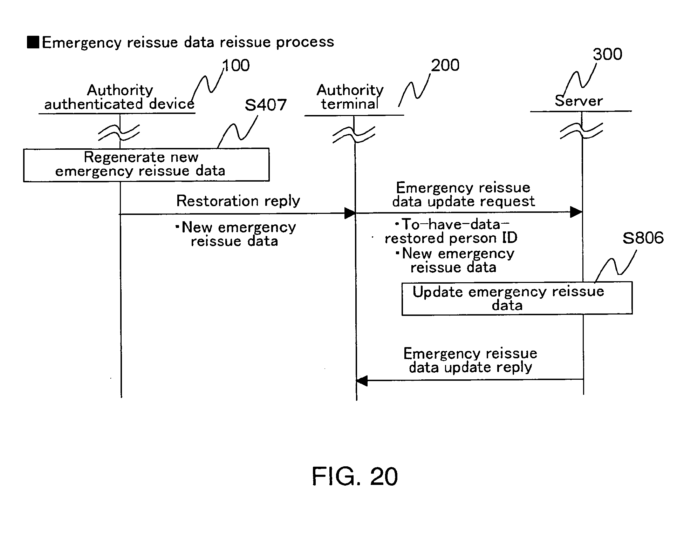

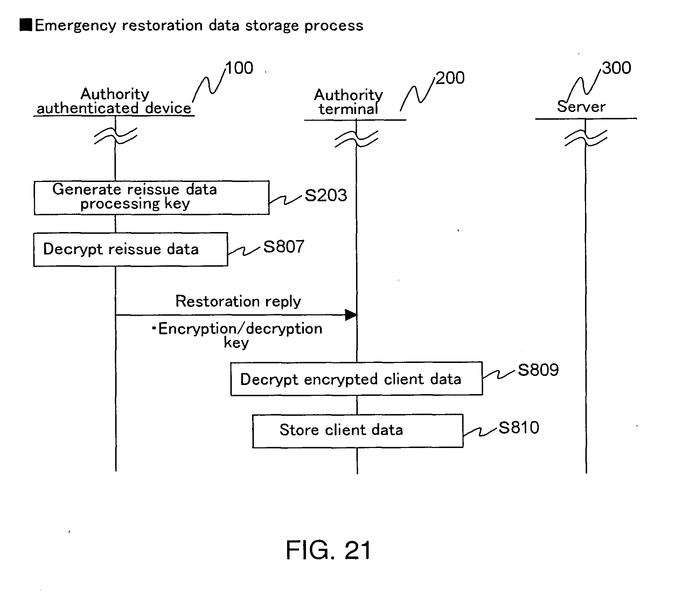

Then the authority authenticated device 100 performs an authority examination comprising a first examination to see whether one of the plurality of authority IDs listed in the authority information list temporarily stored in step S803 matches the authority ID, that is its own user ID, held statically in the authority authenticated device 100; and a second examination to see whether the users organization ID temporarily stored in step S803 matches the users organization ID held statically in the authority authenticated device 100 (step S804). If the results of both the first and second examinations of this authority examination indicate matching, the authority authenticated device 100 marks with a check its own authority information piece of the plurality of authority information pieces temporarily stored in memory 102 to indicate that emergency restoration is approved (step S805). Thereafter, the authority authenticated device 100 calculates the sum of the execution authority proportions of authorities who have approved in the authority information list, and if the sum is at or above 100 %, proceeds to an emergency restoration data storage process (FIG. 21) and if less than 100 %, proceeds to an emergency reissue data reissue process (FIG. 20).

Note that if the execution condition of the number of people is set instead of the execution authority proportion, the authority authenticated device 100 counts authorities who have approved in the authority information list, and if the number of approvals is at or above the execution condition of the number of people, proceeds to the emergency restoration data storage process (FIG. 21), and if not, proceeds to the emergency reissue data reissue process (FIG. 20).

FIG. 20 shows the process flow of the emergency reissue data reissue process. The authority authenticated device 100 encrypts the to-have-data-restored person PW, authority information list, and users organization ID that have been temporarily stored in memory 102 with the emergency reissue data processing key to regenerate emergency reissue data (step S407). Thereafter, the authority authenticated device 100 sends the authority terminal 200 a restoration reply message containing the generated new emergency reissue data.

After receiving that message, the authority terminal 200 sends the server 300 an emergency reissue data update request message containing the to-have-data-restored person ID and the new emergency reissue data.

After receiving that message, the server 300 updates the emergency reissue data identified by the to-have-data-restored person ID and for the to-have-data-restored person ID to the new emergency reissue data (step S806), and sends the authority terminal 200 an emergency reissue data update reply message and finishes the process.

FIG. 21 shows the process flow of the emergency restoration data storage process. The authority authenticated device 100 generates a reissue data processing key for the to-have-data-restored person from the to-have-data-restored person ID and PW, and the device key (step S203). Thereafter, the authority authenticated device 100 decrypts reissue data for the to-have-data-restored person with the reissue data processing key to take the encryption/decryption key out (step S807), and sends the authority terminal 200 a to-have-data-restored person encryption/decryption key reply message containing the encryption/decryption key.

After receiving that message, the authority terminal 200 decrypts encrypted client data for the to-have-data-restored person with the encryption/decryption key to take out client data for the to-have-data-restored person 110 (step S809) and store in the authority terminal 200, and finishes the process (step S810).

In the execution of emergency restoration, each of the plurality of authorities 550 set performs the emergency restoration process and by marking his own authority information with a check, approves the execution of emergency restoration. Without enough approval from authorities 550 to satisfy the execution condition, client data for the to-have-data-restored person cannot be restored. Although the plurality of emergency restoration authorities 550 exist in this embodiment, only one emergency restoration authority 550 may exist depending on the management policy of the organization that the user belongs to.

While, in this embodiment, in the execution of emergency restoration, whether the authority ID is written in the authority information list is examined in order to confirm the genuineness of the authenticated device 100 of an authority, having set a data item indicating a device type in the authenticated device 100, the genuineness of the authenticated device 100 of an authority may be confirmed on the basis of the value of the data item. For example, if the value of the data item is 1, it is determined that the authenticated device 100 is a genuine authority's. Such device type data is set, for example, in the first-order issue process. In the case of setting device type data, the authority information list is omitted. Together with the device type data, the execution condition for emergency restoration such as the execution condition of the number of people is also set at the same time. By setting the device type data, there are issued two types of authenticated devices 100: ones capable of executing emergency restoration and incapable. An authenticated device 100 capable of executing emergency restoration has emergency restoration authority over all users 110 in the same users organization. In this case, an authority need not be set individually for each user 110, and hence the emergency restoration function can be implemented relatively easily.

Note that step S809 in FIG. 21 may be executed in the authenticated device 100 instead of the authority terminal 200. In this case, the process flow of FIG. 19 will be changed as follows.

The authority terminal 200 sends the authority authenticated device 100 a to-have-data-restored person data decryption request message containing the emergency reissue data, reissue data, and encrypted client data for the to-have-data-restored person instead of the restoration request message. And in the process flow of FIG. 21, the authenticated device 100 executes step S809 after the execution of step S807, and sends the authority terminal 200 a to-have-data-restored person data decryption reply message containing the decrypted client data for the to-have-data-restored person instead of the restoration reply message. After receiving that message, the authority terminal 200 executes step S810 and finishes the process.

Moreover, if in step S407 of the authority setting process the emergency reissue data is generated by encrypting not user PW but the reissue data processing key, step S203 of the process flow of FIG. 21 will be omitted. Also, in the process flow of FIG. 20, step S407 is executed using not user PW but the reissue data processing key. Furthermore, if the emergency reissue data is generated by encrypting the encryption/decryption key, steps S203, S807 of the process flow of FIG. 21 will be omitted. Also, in the process flow of FIG. 20, step S407 is executed using not user PW but the encryption/decryption key.

Note that if in the encryption backup process of client data, the client data is encrypted with the reissue data processing key, reissue data and step S807 will be omitted from the process flows of FIGS. 19, 21, and not the encryption/decryption key but the reissue data processing key is contained in the restoration reply message. After receiving that message, the authority terminal 200 decrypts encrypted client data for the to-have-data-restored person with the reissue data processing key.

If the reissue data processing key is generated without the device key, the device key will be omitted in step S203.

In the present invention, when a user terminal 200 is replaced or client data is deleted by mistake, client data can be restored. In that case, the second-order reissue process is omitted and only the decryption restoration process is executed independently, of which step S601 is indispensable.

Although in the present invention, the data restoration process for where both the authenticated device 100 and the user terminal 200 are lost or broken down has been described, if only the authenticated device 100 is lost or broken down, only the second-order reissue process will be performed. If in the encryption backup process of client data, data in the authenticated device 100 is backed up, both the second-order reissue process and the decryption restoration process will be performed. If only the user terminal 200 is lost or broken down, only the decryption restoration process will be performed, in which case step S601 is indispensable.

The sections 121 to 126 of the authenticated device 100, the server 300, and the user terminal 200 may be implemented as hardware or as programs stored in a storage apparatus such as HDD or memory in them. In this case, the CPU of each of them reads out a program from the storage apparatus to memory and executes it.

According to the present invention, even if an IC card holding a key is broken down or lost, it is possible for the user to restore data easily and certainly. And where, having encountered an accident, it is impossible for the user 110 to restore client data on his own, the client data can be restored by a restoration authority set in advance.

Moreover, if a user has deleted client data in a user terminal by mistake or a user terminal is replaced, the client data can be restored easily and certainly.

Therefore, even if key data that was used for backup and restoration is lost, client data can be restored easily and certainly.

Although the preferred embodiment of the present invention has been described specifically, it should be understood that various changes, substitutions and alterations can be made therein without departing from spirit and scope of the inventions as defined by the appended claims.

## Claims

1. An encryption backup method to be executed by an authenticated device of a system having at least the authenticated device and a backup apparatus as components, comprising the steps of:
generating an encryption/decryption key to encrypt client data therewith;
storing the encryption/decryption key in a storage apparatus;
accepting an arbitrary password through a predetermined input interface;
storing the password as a first password in the storage apparatus;
generating a reissue data processing key from the first password; and
encrypting the encryption/decryption key with the reissue data processing key to generate reissue data.

2. An encryption backup method to be executed by an authenticated device of a system having at least the authenticated device and a backup apparatus as components, comprising the steps of:
accepting an arbitrary password through a predetermined input interface;
storing the password as a first password in a storage apparatus; and
generating a reissue data processing key to encrypt client data therewith from a device key stored in the storage apparatus and the first password.

3. The encryption backup method according to claim 1, further comprising the steps of:
accepting second and third passwords from the user through the predetermined input interface;
comparing the second password with the first password stored in the storage apparatus, and when these match, replacing the third password with the first password stored in the storage apparatus;
generating a second reissue data processing key from the third password; and
encrypting the encryption/decryption key with the second reissue data processing key thereby generating second reissue data.

4. An encryption backup method to be executed by an authenticated device of a system having at least the authenticated device and a backup apparatus as components, comprising the steps of:
accepting an arbitrary password through a predetermined input interface;
storing the password as a first password in the storage apparatus;
generating a reissue data processing key to encrypt client data with from the first password; and
encrypting the first password using an insurer key stored in the storage apparatus so as to be associated with a restoration insurer for backed-up, encrypted client data, thereby generating emergency reissue data.

5. The encryption backup method according to claim 1, further comprising the step of:
encrypting the first password or the encryption/decryption key using an insurer key stored in the storage apparatus so as to be associated with a restoration insurer for backed-up, encrypted client data, thereby generating emergency reissue data.

6. The encryption backup method according to claim 4, wherein not the first password but the reissue data processing key is encrypted using the insurer key.

7. The encryption backup method according to claim 1 or 2, further comprising the step of:
the authenticated device sending an apparatus storing client data an encryption backup instruction containing at least the encryption/decryption key or the reissue data processing key to encrypt the client data therewith.

8. A decryption restoration method to be executed by an authenticated device of a system having at least the authenticated device and a backup apparatus as components, comprising the steps of:
accepting an arbitrary password through a predetermined input interface;
generating a reissue data processing key from the password;
acquiring reissue data generated beforehand by encrypting an encryption/decryption key with a reissue data processing key generated from a first password that is an arbitrary password accepted through the input interface, from an information processing apparatus storing the reissue data; and
decrypting the reissue data with the reissue data processing key generated in the generating step thereby taking out the encryption/decryption key to decrypt encrypted client data therewith.

9. A decryption restoration method to be executed by an authenticated device of a system having at least the authenticated device and a backup apparatus as components, comprising the steps of:
accepting an arbitrary password through a predetermined input interface; and
generating a reissue data processing key to decrypt encrypted client data therewith from a device key stored in a storage apparatus and the password.

10. A decryption restoration method to be executed by an authenticated device of a system having at least the authenticated device and a backup apparatus as components, comprising the steps of:
acquiring emergency reissue data generated beforehand by encrypting a first password, that is an arbitrary password accepted through an input interface, using an insurer key stored in a storage apparatus so as to be associated with a restoration insurer for backed-up, encrypted client data, from an information processing apparatus storing the emergency reissue data;
decrypting the emergency reissue data using the insurer key stored in the storage apparatus thereby taking out the first password; and
generating a reissue data processing key to decrypt encrypted client data therewith from the first password.

11. A decryption restoration method to be executed by an authenticated device of a system having at least the authenticated device and a backup apparatus as components, comprising the steps of:
acquiring emergency reissue data generated beforehand by encrypting a first password that is an arbitrary password accepted through an input interface, using an insurer key stored in a storage apparatus so as to be associated with a restoration insurer for backed-up, encrypted client data, from an information processing apparatus storing the emergency reissue data;
decrypting the emergency reissue data using the insurer key stored in the storage apparatus thereby taking out the first password;
generating a reissue data processing key from the first password;
acquiring reissue data generated beforehand by encrypting an encryption/decryption key with a reissue data processing key generated from a first password that is an arbitrary password accepted through the input interface, from an information processing apparatus storing the reissue data; and
decrypting the reissue data with the reissue data processing key generated in the generating step thereby taking out the encryption/decryption key to decrypt encrypted client data therewith.

12. A decryption restoration method to be executed by an authenticated device of a system having at least the authenticated device and a backup apparatus as components, comprising the steps of:
acquiring emergency reissue data generated beforehand by encrypting a first password that is an arbitrary password accepted through an input interface, using an insurer key stored in a storage apparatus so as to be associated with a restoration insurer for backed-up, encrypted client data, from an information processing apparatus storing the emergency reissue data;
decrypting the emergency reissue data using the insurer key stored in the storage apparatus so as to be associated with the restoration insurer for backed-up, encrypted client data, thereby taking out the first password; and
generating a reissue data processing key to decrypt encrypted client data therewith from the first password and a device key stored in the storage apparatus.

13. A decryption restoration method to be executed by an authenticated device of a system having at least the authenticated device and a backup apparatus as components, comprising the steps of:
acquiring emergency reissue data generated beforehand by encrypting an encryption/decryption key to encrypt/decrypt encrypted client data with generated in the authenticated device, using an insurer key stored in a storage apparatus so as to be associated with a restoration insurer for backed-up, encrypted client data, from an information processing apparatus storing the emergency reissue data; and
decrypting the emergency reissue data using the insurer key stored in the storage apparatus, thereby taking out the encryption/decryption key.

14. A decryption restoration method to be executed by an authenticated device of a system having at least the authenticated device and a backup apparatus as components, comprising the steps of:
acquiring emergency reissue data generated beforehand by encrypting a reissue data processing key generated from a first password that is an arbitrary password accepted through an input interface, using an insurer key stored in a storage apparatus so as to be associated with a restoration insurer for backed-up, encrypted client data, from an information processing apparatus storing the emergency reissue data;
decrypting the emergency reissue data using the insurer key stored in the storage apparatus thereby taking out the reissue data processing key;
acquiring reissue data generated beforehand by encrypting an encryption/decryption key with a reissue data processing key generated from a first password that is an arbitrary password accepted through the input interface, from an information processing apparatus storing the reissue data; and
decrypting the reissue data with the taken-out reissue data processing key thereby taking out the encryption/decryption key to decrypt encrypted client data therewith.

15. The decryption restoration method according to claim 8, further comprising the step of:
the authenticated device sending an apparatus storing encrypted client data a decryption restoration instruction containing at least the encryption/decryption key or the reissue data processing key to decrypt the encrypted client data therewith.

16. The decryption restoration method according to claim 10, further comprising the steps of:
the authenticated device decrypting the reissue data with an emergency reissue data processing key to acquire a restoration authority list included in the reissue data;
performing authority identification that compares information about restoration authorities written in the list with information held by the authenticated device;
reading out a value of execution authority strength set for each restoration authority identified successfully by the authority identification from the list and calculating a sum of those values; and
when the sum is at or above a predetermined threshold value, sending a user terminal of a restoration authority an instruction to perform an emergency restoration process.

17. The decryption restoration method according to claim 16, further comprising the steps of:
calculating the number of restoration authorities in the list identified successfully by the authority identification; and
when the number is at or above a predetermined threshold value, sending a user terminal of a restoration authority an instruction to perform an emergency restoration process.

18. An encryption backup method to be executed by a backup apparatus of a system having at least an authenticated device and the backup apparatus as components, comprising the steps of:
accepting client data encrypted with an encryption/decryption key generated in the authenticated device through a predetermined input interface; and
accepting reissue data generated by encrypting the encryption/decryption key with a reissue data processing key generated in the authenticated device from an arbitrary password through a predetermined input interface.

19. An encryption backup method to be executed by a backup apparatus of a system having at least an authenticated device and the backup apparatus as components, comprising the step of:
accepting client data encrypted with a reissue data processing key generated in the authenticated device from a device key stored in the authenticated device and an arbitrary password through a predetermined input interface.

20. An encryption backup method to be executed by a backup apparatus of a system having at least an authenticated device and the backup apparatus as components, comprising the steps of:
accepting client data encrypted with a reissue data processing key generated in the authenticated device from an arbitrary password through a predetermined input interface; and
accepting emergency reissue data generated by encrypting the arbitrary password with an insurer key stored in the authenticated device through a predetermined input interface.

21. The encryption backup method according to claim 18, further comprising the step of:
accepting emergency reissue data generated by encrypting the arbitrary password or the encryption/decryption key with an insurer key stored in the authenticated device through a predetermined input interface.

22. The encryption backup method according to claim 20, further comprising the step of:
accepting emergency reissue data generated by encrypting not the arbitrary password but the reissue data processing key with the insurer key through a predetermined input interface.
